# EUROPÄISCHE PATENTANMELDUNG

(11) **EP 1 533 094 A2**
(43) Veröffentlichungstag der Anmeldung: **25.05.2005**
(21) Anmeldenummer: 04026605.8
(22) Anmeldetag: 09.11.2004
(51) Int. Cl.: B29C 44/46

(54) **Vorrichtung zur kontinuierlichen Verarbeitung von stärkehaltiger Werkstoffe zu plattenförmigen, geschäumten Formkörpern**

(30) Priorität: 12.11.2003 DE 10352751
(71) Anmelder: Holzmüller, Günter, 04159 Leipzig (DE)
(72) Erfinder: Holzmüller, Günter, 04159 Leipzig (DE)
(74) Vertreter: Müller, Volkmar

(57) **Zusammenfassung**

Zur Verminderung des Aufwandes bei der Herstellung geschäumter, plattenförmiger Formkörper aus Stärke und stärkehaltigen Material sowie zur Erweiterung der Anwendungsgebiete für derartige Erzeugnisse wird eine Vorrichtung verwendet, mit der kontinuierlich Formteile hergestellt werden können, deren Breite deutlich größer als die Höhe ist und die über den gesamten Querschnitt eine materialtypische homogene Schaumstruktur aufweisen. Der Vorrichtung wird das Material bereits vor Beginn des Prozesses zur Temperatur- und Druckerhöhung gleichmäßig über den Querschnitt des zu erzeugenden Formteils zugeführt. Die Vorrichtung ist konstruktiv so gestaltet, dass das Material in dieser nicht parallel zur Rotationsachse des Plastifizierelementes sondern radial von der Materialzuführöfmung zur Breitschlitzdüse (3) bewegt wird. Die Formteile entstehen durch Zerteilen eines kontinuierlich extrudierten Bandes, dessen Höhe durch das Schäumvermögen des verwendeten Materials und dessen Breite durch die konstruktive Gestaltung der Vorrichtung bestimmt wird. Durch zwangsweise Förderung des Materials können die Schaumstruktur, die Höhe des Extrudats und die Durchsatzleistung beeinflusst werden.

## Beschreibung

Die Erfindung betrifft eine Vorrichtung zur kontinuierlichen Herstellung von plattenförmigen, geschäumten Formkörpern aus Stärke oder stärkehaltigen Material mit im Verhältnis zur Höhe großen Breite und die Formkörper, die mit dieser Vorrichtung hergestellt werden.

Die Erfindung betrifft eine Vorrichtung zur kontinuierlichen Herstellung von plattenförmigen, geschäumten Formkörpern aus Stärke oder stärkehaltigen Material mit geringen spezifischen Gewicht und stoßabsorbierenden Eigenschaften, vorwiegend für Verpackungszwecke geeignet, wobei die Vorrichtung sich dadurch auszeichnet, dass Formkörper mit, im Verhältnis zur Höhe, großer Breite als einheitliches Ganzes erzeugt werden können. Die Formkörper aus Stärke oder stärkehaltigen Material mit Schaumstruktur entstehen dadurch, dass ein kontinuierlich aus der erfindungsgemäßen Vorrichtung austretendes Band, dessen Breite deutlich größer als die Höhe ist, in beliebig lange Abschnitte zerteilt wird. Die Breite der Formkörper wird effektiv durch die konstruktive Gestaltung der Vorrichtung bestimmt. Die Höhe ist durch die Prozessführung und durch das Schäumvermögen des zur Verarbeitung kommenden stärkehaltigen Werkstoffes beeinflussbar.

Aus der Praxis ist bekannt, dass als Transportschutz empfindlicher Güter und zur Substitution geschäumter polymerer Werkstoffe, wie z. B. geschäumtes Polystyrol, Polyethylen oder Polypropylen, Erzeugnisse aus geschäumter Stärke bzw. stärkehaltiger Materialien verwendet werden.

Zur Verarbeitung von Stärke oder stärkehaltigen Material zu geschäumten Erzeugnissen für vorzugsweise Verpackungszwecke werden in Anlehnung an die kunststoffverarbeitende Industrie Extruder verwendet, die in speziellen Details den Verarbeitungseigenschaften von Stärke angepasst sind. Extruder für die kunststoffverarbeitende Industrie haben im allgemeinen eine lange, am vorderen Ende spitz auslaufende, eingängige Plastifizierschnecke, bei der der Schneckengang im Verhältnis zum Schneckensteg einen großen Querschnitt aufweist. Die Düse ist zentrisch vor der Schneckenspitze angeordnet. Die Werkstoffe, die mit diesen Maschinen verarbeitet werden sind bei Eintritt in den Düsenraum plastifiziert.

Extruder für die Verarbeitung von Stärke zu geschäumten Verpackungshilfsstoffen haben im allgemeinen keine Plastifizierschnecke sondern eine kurze mehrgängige Förderschnecke, die am vorderen Ende eine Planfläche aufweist. Die Schneckengänge sind als rechteckige Nuten eingearbeitet und haben im Verhältnis zum Schneckensteg einen kleinen Querschnitt. Die beheizte Düse ist außermittig am Rotationskreis der Schneckengänge angeordnet. Bei diesen Extrudern wird das Material im Zylinder parallel zur Rotationsachse der Förderschnecke vom Einfülltrichter zum Zylinderausgang bewegt. In einer, der Düsenbohrung vorgeschalteten, kalottenförmigen Düsenkammer erfolgt das Erhitzen des Materials auf Verarbeitungstemperatur bei gleichzeitigem Druckanstieg. Die Verarbeitungstemperatur von Stärke zu geschäumten Erzeugnissen liegt vorzugsweise zwischen 140 °C und 200 °C. Bei Erwärmung des Materials bis in diesen Temperaturbereich verdampft das in den Stärkekörnern vorhandene Wasser, wodurch der Expansionsdruck aufgebaut wird. Dieser drückt das Material aus der kalottenförmigen Düsenkammer durch die Düsenbohrung nach außen. Beim Verlassen der Düse erfolgt ein plötzlicher Druckabfall, der das Expandieren bzw. Aufschäumen der Stärkekömer bewirkt. Zur Erzielung optimaler Ergebnisse ist der Querschnitt der Düsenbohrung dem vom Extruder erzeugten Förderstrom angepasst. Der Aufschäumprozess ist endgültig, das heißt, es ist keine nachträgliche Formgebung ohne Beeinflussung der Schaumstruktur möglich.

Zur Herstellung von Loose-fill, dem am häufigsten verwendeten Verpackungsmaterial aus Stärke, werden Düsen mit, im allgemeinen kreisrunden, Öffnungen verwendet. Der aus der Düse austretende Strang wird sofort nach dem Aufschäumen in gleichmäßig lange Stücke zerteilt. Es entstehen Formkörper mit ca. 20 mm Durchmesser und ca. 30 mm Länge, die als Verpackungsmittel gute stoßabsorbierende Eigenschaften aufweisen und zur Substitution von geschäumten Verpackungsmitteln aus Polymeren bei einer Vielzahl von Anwendungsfällen geeignet sind. Die Verwendung von Loos-fill hat jedoch den Nachteil, dass es ein Schüttgut ist. Das zu verpackende Gut wird in einer vorgegebenen Position innerhalb der Umverpackung nicht fixiert. Außerdem muss der gesamte Hohlraum zwischen Verpackungsgut und Umverpackung vollständig ausgefüllt werden.

Zwecks Verbesserung der Eigenschaften als Verpackungsmittel und zur Erweiterung der Anwendungsgebiete für geschäumte Stärkeerzeugnisse werden aus längeren Strangabschnitten aus der Loose-fill-Produktion plattenförmige Formkörper hergestellt. In der Patentschrift DE 4431755 C2 ist ein Verfahren beschrieben, bei dem aus parallel angeordneten Strangabschnitten oder mäanderförmig extrudierten Strängen Sandwichplatten hergestellt werden. In den Patentschriften DE 4431777 C2 und WO 96/07693 ist beschrieben, dass extrudierte Stärkeschaumprofile, die einen Durchmesser zwischen 10 mm bis 50 mm aufweisen, durch Aufbringen von Feuchtigkeit miteinander zu Platten bzw. Mehrschichtplatten verbunden werden. Des weiteren ist aus der Praxis bekannt, dass Loose-fill oder geschäumte Stränge unter Verwendung von Haftmitteln in Formen zu quaderförmigen Formteilen gepresst werden.

Den aus dem Stand der Technik bekannten Vorrichtungen liegt zugrunde, dass in diesen der Materialtransport parallel zur Rotationsachse der Förderschnecke erfolgt und die mit diesen Vorrichtungen herstellbaren geschäumten strangförmigen Erzeugnisse haben den Nachteil, dass deren Querschnitt bezüglich Höhe und Breite keine wesentlichen Unterschiede aufweisen. Trotz der beschriebenen Anpassung der Extruder an die Verarbeitungseigenschaften von Stärke und stärkehaltigem Material ist es nicht möglich, das auf Verarbeitungstemperatur erhitzte schäumfähige Material aus einem axial orientierten Materialstrom heraus in einer Breitschlitzdüse so zu verteilen, dass anschließend ein Profil extrudiert werden kann, dessen Breite deutlich größer als die Höhe ist. Das trifft vor allem auf native Stärke, gemahlenes Getreide und Stärkecompounds, wie in der Patentschrift EP 447792 A1 beschrieben, zu.

Es sind mit der bekannten Technik plattenförmige Formkörper nur in der Art herstellbar, indem die ex-trudierten Stränge auf Länge geschnitten, mit Haftmitteln benetzt und anschließend geordnet zusammengefügt oder als Loose-fill mit Haftmittel benetzt, in Pressformen ein-gefüllt und anschließend zu Formkörpern mit definierten Maßen zusammengepresst werden. Die Herstellung solcher plattenförmiger Erzeugnisse erfordert zusätzliche und kostenaufwändige Arbeitsgänge und Ausrüstungen. Die bekannten, aus extrudierten Profilen geschäumter Stärke oder stärkehaltigem Material zusammengefügten, plattenförmigen Gebilde haben über ihren Gesamtquerschnitt keine materialtypische homogene Schaumstruktur.

Der Erfindung liegt die Aufgabe zugrunde, den Aufwand für die Herstellung geschäumter, plattenförmiger Formkörper zu verringern und die Formkörper als einheitliches Ganzes herzustellen.

Diese Aufgabe wird erfindungsgemäß dadurch gelöst, dass die Stärke oder das stärkehaltige Material bereits vor Beginn des Prozesses zur Temperatur- und Druckerhöhung gleichmäßig über den Querschnitt des zu erzeugenden Formteils der Vorrichtung zugeführt und die Vorrichtung konstruktiv so gestaltet wird, dass die Bewegung des Materials in dieser nicht parallel zur Rotationsachse des Förderelementes sondern radial erfolgt. Aus eigenen Versuchen ist bekannt, dass Stärke oder stärkehaltiges Material je nach Art der Aufbereitung und Zusammensetzung sowie in Abhängigkeit von der Verweilzeit im Plastifiziersystem bei Verarbeitungstemperatur einen hochviskosen bis knetbaren Zustand aufweist. Diese Eigenschaft gestattet es nicht, das Material aus einem axial orientierten Materialstrom heraus, isotherm und isobar im Stauraum einer Breitschlitzdüse zu verteilen und anschließend zu einem Erzeugnis mit, im Verhältnis zur Höhe, großen Breite und materialspezifischer, homogener Schaumstruktur längs und quer zur Extrusionsrichtung aufzuschäumen.

Konstruktiv wird der Erfindungsgedanke in der Art gelöst, dass die Vorrichtung im wesentlichen aus einem Gehäuse und einem Rotor besteht. Das Gehäuse ist temperierbar, hat eine Materialzuführöffnung, eine Breitschlitzdüse sowie beidseitig je einen Gehäusedeckel. Die Breitschlitzdüse ist heizbar und dem Materialaustrittsspalt ist ein Stauraum vorgelagert. Im Rotor sind radial bewegliche Schieber angeordnet. Die radiale Bewegung der Schieber im Rotor ermöglichen die Bildung von Materialtransportkammern, die durch die Stirnfläche der Schieber, den Seitenwänden der Schlitze im Rotor in denen die Schieber geführt sind und dem Innendurchmesser des Gehäuses gebildet werden. Die Schieber können je nach Ausführungsform der Vorrichtung radial frei beweglich sein, oder durch eine Steuerung zwangsweise bewegt werden. Die Abmessungen der Materialzuführöffnung, der Schieber und der Breitschlitzdüse in Richtung der Rotationsachse des Rotors sind praktisch gleich und entsprechen der Breite des herzustellenden Erzeugnisses. Der Rotor wird von einem drehzahlregelbaren Antriebssystem angetrieben. Durch die Steuerung der Schieber ist es möglich, den Druck auf das Material beim Transport von der Einfüllöffnung zum Stauraum der Breitschlitzdüse, den maximalen Hub der Schieber im Bereich der Materialzuführöffnung sowie das Volumen der Materialtransportkammern an der Materialzuführöffnung und am Stauraum der Breitschlitzdüse zu beeinflussen.

Die Herstellung der Formteile mit der erfindungsgemäßen Vorrichtung erfolgt in der Art, dass pulverförmiges oder granuliertes Material, welches zumindest zu einem Teil Stärke enthält, mittels einer allgemein bekannten Stopfvorrichtung durch die Materialzuführöffnung, axial gleichmäßig verteilt, über die gesamte Länge den Materialtransportkammern zugeführt wird. Die Menge des zugeführten Materials wird durch den Hub der Schieber bestimmt. Infolge der Drehbewegung des Rotors wird die Stärke oder das stärkehaltige Material in den Materialtransportkammern von der Materialzuführöffnung in den Stauraum der Breitschlitzdüse transportiert. Zur Anpassung der Temperatur der verwendeten Stärke oder des stärkehaltigen Materials beim Eintritt in den Stauraum der Breitschlitzdüse an die optimale Temperatur für den weiteren technologischen Prozess, wird das Gehäuse entsprechend temperiert.

Der Rotor arbeitet wie ein Drehschieber. Der Stauraum wird abwechselnd mit Material versorgt beziehungsweise durch die Flächen am Außendurchmesser zwischen den Materialtransportkammern verschlossen. Im Stauraum wird das Material durch Friktion und durch die Düsenheizung auf die erforderliche Verarbeitungstemperatur, die vorzugsweise zwischen 140 °C und 200 °C liegt, erhitzt, wodurch infolge Verdampfung des in den Stärkekörnern vorhandenen Wassers der Druck zum Schäumen aufgebaut wird. Das vom Rotor ständig nachgeförderte Material verhindert das vorzeitige Aufschäumen im Stauraum und trägt dazu bei, dass das erhitzte Material durch den Materialaustrittsspalt nach außen gedrückt wird. Durch den plötzlichen Druckabfall bei Verlassen des Materialaustrittsspaltes wird der Schäumprozess ausgelöst, wodurch ein dem Expansionsvermögen des Materials entsprechend hohes und der Länge des Materialaustrittsspaltes breites Band entsteht, welches zu Formkörpern beliebiger Länge zerteilt wird.

Die mit der erfindungsgemäßen Vorrichtung hergestellten Formkörper weisen im Verhältnis zur Höhe eine deutlich größere Breite und über den gesamten Querschnitt eine, für das verarbeitete Material typische, homogene Schaumstruktur auf.
Die mit der Erfindung erzielten Vorteile bestehen insbesondere darin, dass für die Herstellung von Formkörpem aus Stärke oder stärkehaltigen Material, deren Breite deutlich größer als die Höhe ist, keine zusätzliche Ausrüstungen und aufwändige Arbeitsgänge wie Kleben oder Pressen erforderlich sind und die Formteile über den gesamten Querschnitt eine, für das verarbeitete Material typische, homogene Schaumstruktur längs und quer zur Extrusionsrichtung aufweisen. Die Steuerung der Bewegung der Schieber gestattet die zwangsweise Zuführung von Stärke oder stärkehaltigen Material in den Stauraum. Das ermöglicht die Beeinflussung der Schaumstruktur, der Höhe des Extrudats und der Durchsatzleistung.

Ein Ausführungsbeispiel der Erfindung ist in der Zeichnung dargestellt und wird im folgenden näher beschrieben.

Es zeigen
- Figur 1:: den Halbschnitt der Vorrichtung,
- Figur 2:: den Querschnitt durch Figur 1.

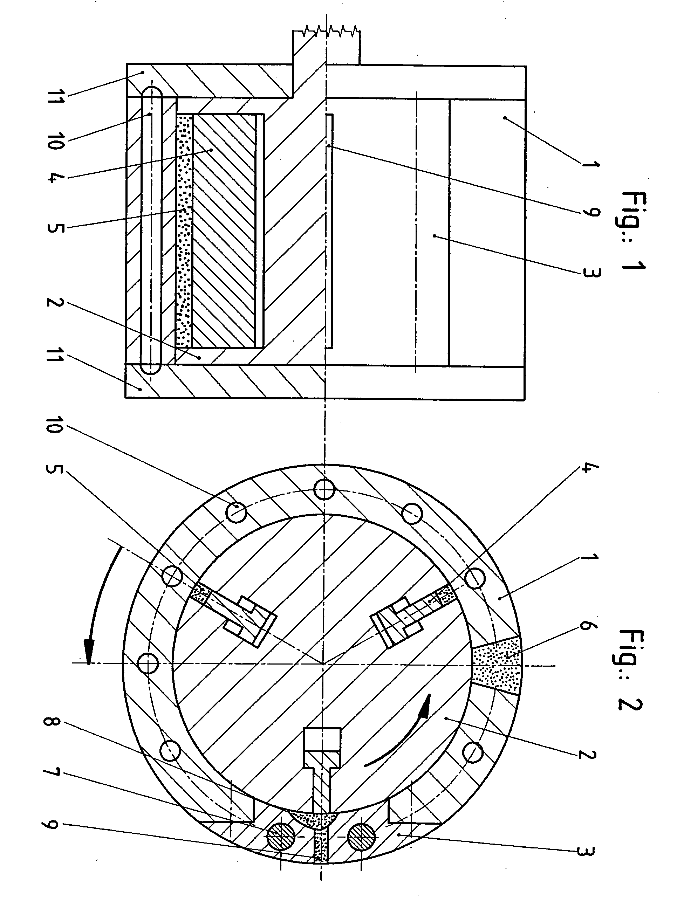

Die Vorrichtung besteht erfindungsgemäß aus einem Gehäuse 1, einem temperierbaren Rotor 2 mit einer Breitschlitzdüse 3, wobei die jeweils axiale Abmessung von Gehäuse 1 und Rotor 2 den Erfordernissen zur Herstellung der Abmessung des Erzeugnisses quer zur Extrusionsrichtung entspricht. Der Rotor 2 weist radial bewegliche Schieber 4 auf. Diese Schieber 4 bilden mit den Seitenwänden der Schlitze in denen die Schieber 4 geführt werden und dem Innendurchmesser von Gehäuse 1 Materialtransportkammern 5. Die Schieber 4 können in den Schlitzen, in denen sie geführt sind, frei beweglich sein oder mittels einer Steuerung zwangsweise bewegt werden.

Im temperierbaren Gehäuse 1 ist eine Materialzuführöffnung 6, eine Breitschlitzdüse 3 mit Düsenheizung 7 und einem Stauraum 8 angeordnet. Die Materialzuführöffnung 6, der Stauraum 8 und der Materialaustrittsspalt 9 haben in Richtung der Rotationsachse des Rotors 2 die gleiche Abmessung wie die Materialtransportkammern 5 im Rotor 2. Die Temperierung von Gehäuse 1 erfolgt durch die Temperierkanäle 10. Seitlich wird das Gehäuse 1 mit den Gehäusedeckeln 11 begrenzt.

Die Herstellung der geschäumten Erzeugnisse erfolgt in der Art, dass pulverförmiges oder granuliertes Material, welches zumindest zu einem Teil Stärke enthält, mittels einer allgemein bekannten Stopfeinrichtung durch die Materialzuführöffnung 6, über deren gesamte Länge gleichmäßig in die Materialtransportkammern 5 gedrückt wird. Die Schieber 4 werden dabei zentripedal bewegt. Infolge der Drehbewegung des Rotor 2 wird die Stärke oder das stärkehaltige Material in den Materialtransportkammern 5 zum Stauraum 8 transportiert. Die Übergabe der Stärke oder des stärkehaltigen Materials aus den Materialtransportkammern 5 in den Stauraum 8 erfolgt entweder mit Unterstützung der auf die Schieber 4 einwirkenden Fliehkraft oder durch die gesteuerte Bewegung der Schieber 4. Zur Beeinflussung und Anpassung der Temperatur der verwendeten Stärke oder des stärkehaltigen Materials beim Eintritt in den Stauraum 8 an die optimale Temperatur für den weiteren technologischen Prozess wird das Gehäuse 1 entsprechend temperiert.

Im Stauraum 8 wird die Stärke oder das stärkehaltige Material mit Unterstützung der Düsenheizung 7 auf die erforderliche Verarbeitungstemperatur, die im allgemeinen zwischen 140 °C und 200 °C liegt, erhitzt. Durch die Verdampfung des in den Stärkekörnern vorhandenen Wassers erfolgt der für den Schäumvorgang erforderliche Druckaufbau im Stauraum 8. Der Rotor 2 arbeitet mit seinen Flächen zwischen den Materialtransportkammern 5 am Außendurchmesser wie ein Drehschieber. Dadurch wird der Druckaufbau im Stauraum 8 ermöglicht. Das ständig in den Materialtransportkammern 5 nachgeförderte Material trägt dazu bei, dass die Stärke oder das stärkehaltige Material durch den Düsenaustrittsspalt 9 nach außen gedrückt wird. Durch den plötzlichen Druckabfall bei Verlassen des Düsenaustrittsspaltes 9 wird der Schäumprozess ausgelöst. Es entsteht ein dem Expansionsvermögen des verwendeten Materials hohes und der Länge des Materialaustrittsspaltes breites Band, welches zu Formkörpern beliebiger Länge zerteilt wird. Die Steuerung der Bewegung der Schieber 4 gestattet die zwangsweise Zuführung von Stärke oder stärkehaltigem Material in den Stauraum 8. Das ermöglicht die Beeinflussung der Schaumstruktur, der Höhe des Extrudats und der Durchsatzleistung. Die mit der erfindungsgemäßen Vorrichtung hergestellten Formkörper weisen im Verhältnis zur Höhe eine deutlich größere Breite und über den gesamten Querschnitt eine für das verarbeitete Material typische und homogene Schaumstruktur längs und quer zur Fertigungsrichtung auf.

### Liste der verwendeten Bezugszeichen:

- 1: Gehäuse
- 2: Rotor
- 3: Breitschlitzdüse
- 4: Schieber
- 5: Materialtransportkammer
- 6: Materialzuführöffnung
- 7: Düsenheizung
- 8: Stauraum
- 9: Materialaustrittsspalt
- 10: Temperierkanäle
- 11: Gehäusedeckel

## Patentansprüche

1. Vorrichtung zur kontinuierlichen Herstellung von plattenförmigen, geschäumten Formkörpern mit geringem spezifischem Gewicht und stoßabsorbierenden Eigenschaften aus Stärke oder stärkehaltigen Material, im wesentlichen bestehend aus einem Gehäuse (1) und einem Rotor (2) **dadurch gekennzeichnet, dass** das Gehäuse (1) eine Materialzuführöffnung (6) und eine heizbare Breitschlitzdüse (3) und der Rotor (2) an seinem Außendurchmesser Materialtransportkammern (5) aufweist, die durch radial bewegliche Schieber (4) im Rotor (2) und dem Innendurchmesser des Gehäuses (1) gebildet werden und die Materialzuführöffnung (6) und die Breitschlitzdüse (3) radial aufeinanderfolgend im Gehäuse (1) angeordnet sind.

2. Vorrichtung nach Anspruch 1 **dadurch gekennzeichnet, dass** die Abmessung der Materialtransportkammern (5) im Rotor (2) parallel zur Rotationsachse des Rotor (2) gleich der Abmessung von Materialzuführöffnung (6), Schieber (4), Stauraum (8) und Materialaustrittsspalt (9) ist und die Länge der Materialzuführöffnung (6) der Breite des herzustellenden Erzeugnisses entspricht.

3. Vorrichtung nach Anspruch 1 und 2 **dadurch gekennzeichnet, dass** die Materialtransportkammern (5) in Abhängigkeit vom Rotationswinkel des Rotor (2) unterschiedliche Volumina aufweisen.

4. Geschäumtes, plattenförmiges Formteil aus Stärke oder stärkehaltigen Material **dadurch gekennzeichnet, dass** das Formteil mit der Vorrichtung nach den Ansprüchen 1 bis 3 hergestellt ist.
